# EUROPÄISCHE PATENTSCHRIFT

(11) **EP 3 584 462 B1**
(45) Veröffentlichungstag und Bekanntmachung des Hinweises auf die Patenterteilung: **20.05.2020**
(21) Anmeldenummer: 18178846.4
(22) Anmeldetag: 20.06.2018
(51) Int. Cl.: F16D 65/092

(54) **BELAGTRÄGER FÜR EINE SCHEIBENBREMSE**
BRAKE LINING DEVICE FOR A DISC BRAKE
SUPPORT DE GARNITURE POUR UN FREIN A DISQUE

(43) Veröffentlichungstag der Anmeldung: 25.12.2019
(73) Patentinhaber: WABCO Europe BVBA, 1170 Brüssel (BE)
(72) Erfinder: SCHERER, Vitalij, 69181 Leimen (DE); DORN, Philip, 68165 Mannheim (DE); GROßKOPF, Ralf, 74931 Lobach (DE)
(74) Vertreter: Copi, Joachim

(56) Entgegenhaltungen:
- WO-A1-2016/124171
- DE-A1- 3 041 102
- DE-A1-102014 017 684
- DE-U1-202005 021 269
- US-A1- 2005 284 710

## Beschreibung

Die Erfindung betrifft einen Belagträger für eine Scheibenbremse, insbesondere für Nutzfahrzeugscheibenbremsen nach dem Anspruch 1

Belagträger der oben genannten Art sind bekannt. Sie sind plattenförmig und aus Blech oder als Gussbauteil und werden insbesondere in Scheibenbremsen für Nutzfahrzeuge eingesetzt.
Bremsbeläge für Scheibenbremsen weisen beispielsweise einen Belagträger, auch Bremsbelagträger genannt, auf. Auf dem Belagträger ist ein Reibmaterial, im folgenden Reibbelag genannt, angeordnet. Solche mit einem Reibbelag ausgestatteten Belagträger werden beispielsweise in pneumatisch und/oder elektromechanisch betätigbaren Scheibenbremsen angeordnet.
Dabei wird in der Regel über eine der Bremsscheibe abgewandten Fläche des Reibbelags die Bremskraft beim Zuspannen eingeleitet, indem der Belagträger in Axialrichtung der Scheibenbremse verschoben und dadurch mit dem Reibbelag gegen die Bremsscheibe gedrückt wird. Bei Anlage des Bremsbelages an der Bremsscheibe werden unter anderem über den Randbereich die Bremsumfangskräfte in die Scheibenbremse, wie etwa den Bremsenträger, eingeleitet.

Somit kommen innerhalb der Scheibenbremse den genannten Randbereichen mehrere Bedeutungen zu. Sie sind verschiedenen Belastungen ausgesetzt. Im Ruhezustand, d.h. bei nicht betätigter Scheibenbremse, liegen sie an oder auf Auflageflächen des Bremsenträgers und sind Schwingungen während des Fahrbetriebes ausgesetzt. Beim Bremsen und mit zunehmendem Belagverschleiß werden sie axial in Richtung der Bremsscheibe oder axial entgegengesetzt der Richtung der Bremsscheibe verschoben. Sie übertragen die Bremsumfangskräfte auf die Scheibenbremse. Bei Bremsentlastung müssen sie sich leichtgängig wieder von der Bremsscheibe lösen, um ein Restschleifen zu vermeiden.

Weitere Einzelheiten zu Bremsbelägen sind beispielsweise der EP 694 707 zu entnehmen. Um den verschiedenen Anforderungen beim Bremsen und beim Lösen der Scheibenbremse gerecht werden zu können, müssen sehr hohe Anforderungen an die Güte der Randflächen gestellt werden. Dabei gilt es, Zerstörungen, Verschleiß, Verkanten in den Führungen und Beschädigungen an den Führungsflächen des Festteiles zu verhindern. Insbesondere sind in diesem Zusammenhang auch hohe Anforderungen an die Maßgenauigkeit zu stellen, um Klappergeräusche zu vermeiden und/oder die Verschiebbarkeit des Bremsbelages in jeder Betriebsstellung sicherzustellen.

Aufgabe der Erfindung ist es, bei einem geringen Materialaufwand die Lebensdauer des auf dem Belagträger angeordneten Reibbelags und des Belagträgers zu erhöhen.

Die Aufgabe wird dadurch gelöst, dass eine Randfläche eines Belagträgers, axial über eine Breite des Belagträgers, im Bereich einer Ausnehmung, eine Verstärkungsrippe aufweist. Die Verstärkungsrippe reduziert Spannungen im Belagträger während eines Zuspannvorgangs der Scheibenbremse. Das heißt, dass während eines Zuspannvorgangs der Scheibenbremse ein Druckstempel mittig gegen eine Rückseite der Belagträgerplatte drückt und den Belagträger mit dem Reibbelag gegen die Bremsscheibe drückt.

In einer weiteren Ausgestaltung flacht die Verstärkungsrippe, bezogen auf den Belagträger, tangential in Richtung der Außenseite des Belagträgers, ab. Die Verstärkungsrippe weißt dazu Seitenbereiche auf. Je flacher die Seitenbereiche der Verstärkungsrippe in die Ausnehmung übergehen, desto mehr Spannungen werden während eines Zuspannvorgangs der Scheibenbremse von der Belagträgermitte nach außen in Richtung des Randbereichs des Belagträgers abgebaut.

Es hat sich zudem gezeigt, dass die Verstärkungsrippe bevorzugt mittig im Bereich einer halben Länge der Ausnehmung angeordnet ist. Der Vorteil ist, dass die Versteifung des Bremsträgers lokal nur in dem Bereich des Bremsträgers erfolgt, wo der Druckstempel gegen die Belagträgerplatte drückt. Eine Verschiebung der Verstärkungsrippe nach links außen des Belagträgers oder nach rechts außen des Belagträgers hätte den Nachteil, dass die Spannungen im Bremsträger während eines Zuspannvorgangs der Scheibenbremse nicht richtig abgebaut werden und Materialermüdungen in dem Belagträger auftreten können.

In einer weiteren Ausführungsform weist der Belagträger eine Breite größer gleich 9 mm auf. Es hat sich gezeigt, dass die Lebensdauer bei Belagträgerplatten mit einer zusätzlichen Verstärkungsrippe mit einer Breite größer gleich 9 mm der Belagträgerplatte exponentiell steigt.

Darüber hinaus hat es sich als Vorteil erwiesen, dass der Belagträger als Gussteil ausgebildet ist. Gussbauteile sind gegenüber Fräß- und Stanzverfahren vergleichsweise günstig in der Herstellung, da das Gussverfahren nur eine geringe oder keine Nachbearbeitung erfordert.

In einer weiteren Ausführung geht die Verstärkungsrippe über einen Radius der Ausnehmung des Belagträgers hinaus, sofern es die Größenverhältnisse der Scheibenbremse zulassen.

In einer letzten Ausgestaltung ist die Verstärkungsrippe einteilig mit dem Belagträger ausgebildet. Die Verstärkungsrippe wird mit dem Belagträger bevorzugt als Gussteil ausgebildet. Gegenüber einer separaten Ausgestaltung der Verstärkungsrippe ist die einteilige Ausgestaltung kostengünstiger in der Herstellung, da keine zusätzlichen Arbeitsschritte, wie die Herstellung einer Schweißnaht, zur Anordnung der Verstärkungsrippe an dem Belagträger erforderlich sind.
Nachfolgend werden ausgewählte Ausführungsbeispiele der Erfindung anhand der beigefügten Figuren erläutert.

Es zeigt:
Fig. 1 einen in einem Belagträgerschacht eines Bremsenträgers angeordneten Belagträger mit einem Reibbelag,
Fig. 2 einen Belagträger von der Unterseite,
Fig. 3 eine seitlich geschnittene Ansicht eines Belagträgers,
Fig. 4 einen Belagträger von der Rückseite,
Fig. 5 einen Belagträger von der Rückseite in einer weiteren Ausführungsform der Verstärkungsrippe.

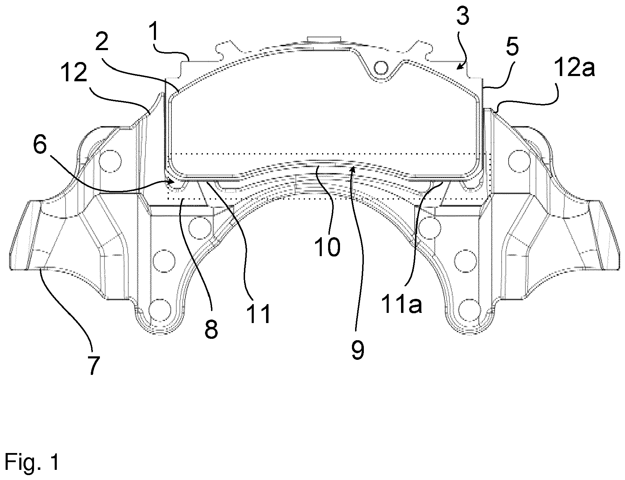

Fig. 1 zeigt einen Bremsenträger 7 mit einem Belagträgerschacht 6. In dem Belagträgerschacht 6 ist ein mit einem Reibbelag 2 versehener Belagträger 1 angeordnet. Der Reibbelag 2 ist an einer Vorderseite 3 des Belagträgers angeordnet. Zudem stützt sich der Belagträger 1 mit einer um den Belagträger 1 umlaufenden Randfläche 5 radial an zwei Auflageflächen 11, 11a im Belagträgerschacht 6 ab. Seitlich ist der Belagträger 1 mittels der Randfläche 5 durch zwei Bremsträgerhörner 12, 12a geführt. Die Trägerhörner 12, 12a verhindern ein seitliches Herausdrehen des Belagträgers 1 aus dem Belagträgerschacht 6.
Der in Richtung der Auflageflächen 11, 11a des Belagträgerschachts 6 angeordnete Randbereich 5 weist einen Bereich 8 auf, in dem der Belagträger 1 eine Ausnehmung 9 aufweist. An der Ausnehmung 9 ist mittig eine Verstärkungsrippe 10 angeordnet.

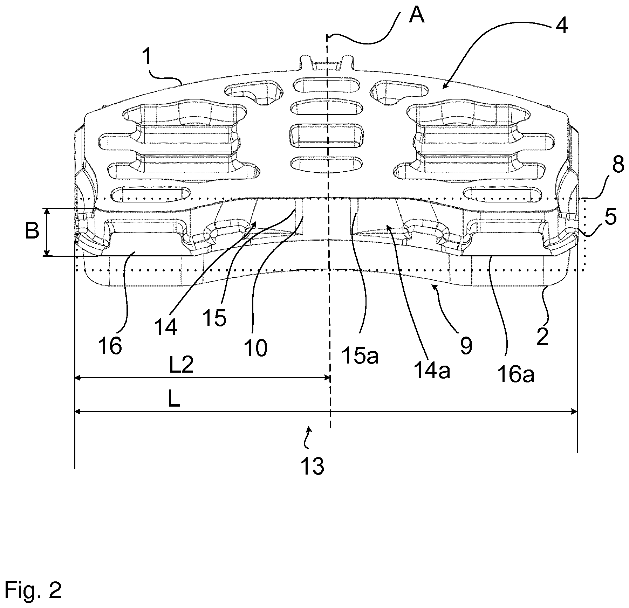

In Fig. 2 ist der Belagträger 1 nach Fig. 1 in einer gedrehten Perspektive gezeigt, bei dem eine Rückseite 4 des Belagträgers 1 und eine Unterseite 13 des Belagträgers 1 sichtbar sind. Besonders deutlich ist die Ausgestaltung der Ausnehmung 9 sowie die Anordnung und Ausgestaltung der Verstärkungsrippe 10 zu sehen. Die Verstärkungsrippe 10 erstreckt sich axial entlang einer Achse A des Belagträgers 1 über eine gesamte Breite B des Belagträgers 1. Angeordnet ist die Verstärkungsrippe 10 mittig im Bereich einer halben Länge L2 des Belagträgers 1. Die Gesamtlänge des Belagträgers 1 ist durch eine Länge L definiert. Die Verstärkungsrippe 10 teilt die Ausnehmung 9 in zwei Teilbereiche 14, 14a und flacht, ausgehend von dem Belagträger 1, tangential in Richtung von Auflageflächen 16, 16a des Belagträgers 1 ab. Zwischen der Verstärkungsrippe 10 und den Teilbereichen 14, 14a der Ausnehmung 9 ist also keine Stufe vorhanden. Weiterhin weist die Verstärkungsrippe zwei Seitenbereiche 15, 15a auf, die den Übergang zwischen der Verstärkungsrippe 10 und den Teilbereichen 14, 14a der Ausnehmung 9 bilden.

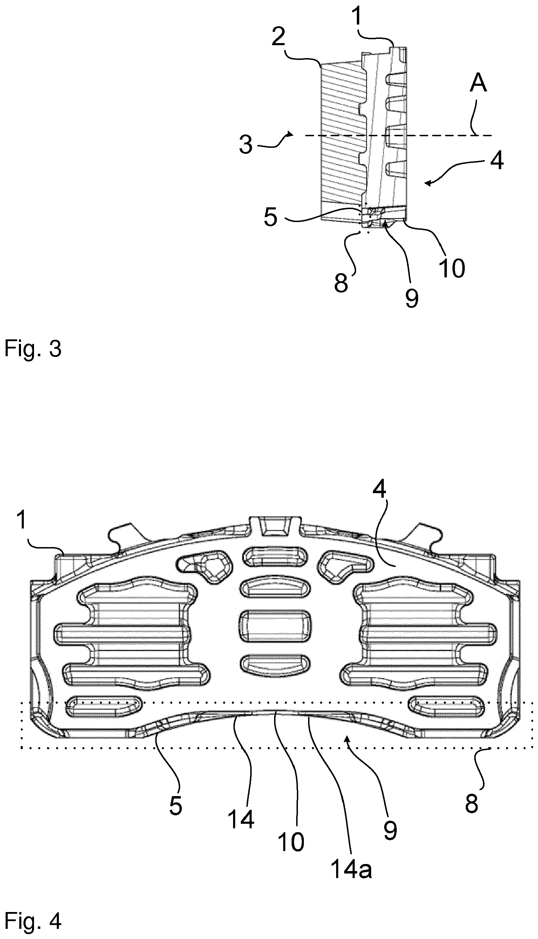

Die Fig. 3 zeigt den Belagträger in einer geschnittenen seitlichen Perspektive nach den Fig. 1 und 2. In Fig. 3 ist noch einmal die Anordnung der Verstärkungsrippe 10 in der Ausnehmung 9 der Belagträgers 1 aus der seitlich Perspektive verdeutlicht.

Fig. 4 zeigt den Belagträger 1 nach den Figuren 1 bis 3 vollständig von der Rückseite 4. Insbesondere ist noch einmal der flache Übergang von der Verstärkungsrippe 10 zu den Teilbereichen 14, 14a der Ausnehmung 9 gezeigt.

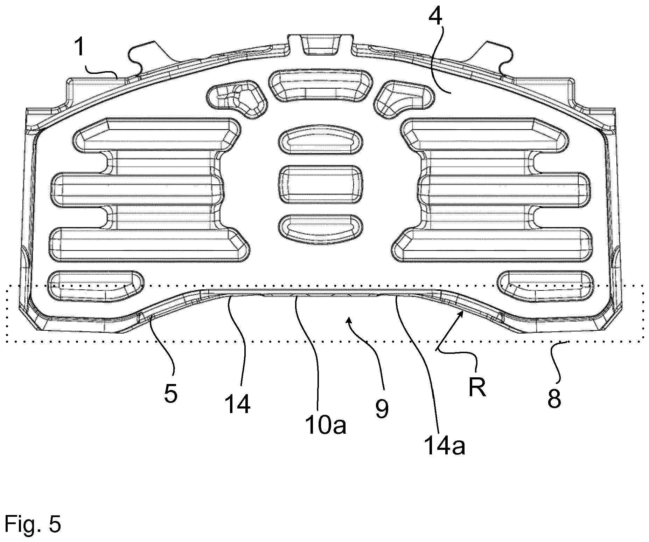

Fig. 5 zeigt, bis auf einer geänderten Ausführung der Verstärkungsrippe 10a, einen Belagträger 1 nach den Figuren 1 bis 4 von der Rückseite. Die Verstärkungsrippe 10 geht über einen Radius R der Ausnehmung 9 des Belagträgers 1 hinaus.

### Bezugszeichenliste als Teil der Beschreibung

- 1: Belagträger
- 2: Reibbelag
- 3: Vorderseite des Belagträgers 1
- 4: Rückseite des Belagträgers 1
- 5: Randfläche des Belagträgers 1
- 6: Belagträgerschacht
- 7: Bremsenträger
- 8: Bereich der Randfläche 5
- 9: Ausnehmung
- 10, 10a: Verstärkungsrippe
- 11, 11a: Auflageflächen des Belagträgerschachts 6
- 12, 12a: Bremsträgerhörner
- 13: Unterseite des Belagträgers 1
- 14, 14a: Teilbereiche der Ausnehmung 9
- 15, 15a: Seitenbereiche der Verstärkungsrippe 10
- 16, 16a: Auflageflächen des Belagträgers 1
- B: Breite des Belagträgers 1
- L: Länge des Belagträgers 1
- L2: halbe Länge L des Belagträgers 1
- A: axiale Achse des Belagträgers 1
- R: Radius der Ausnehmung 9 des Belagträgers 1

## Patentansprüche

1. Belagträger (1) für eine Scheibenbremse
mit einem Reibbelag (2), und eine dem Reibbelag (2) zugewandte Vorderseite (3), eine dem Reibbelag (2) abgewandte Rückseite (4) und eine die Rückseite (4) in der Draufsicht umlaufenden Randfläche (5) aufweist und der einem Belagträgerschacht (6) zugewandte Bereich (8) der Randfläche (5) eine Ausnehmung (9) aufweist, **dadurch gekennzeichnet, dass** die Randfläche (5) axial über eine Breite (B) des Belagträgers (1), im Bereich der Ausnehmung (9), eine Verstärkungsrippe (10; 10a) aufweist.

2. Belagträger (1) nach Anspruch 1, **dadurch gekennzeichnet, dass** die Verstärkungsrippe (10; 10a) bezogen auf den Belagträger (1) tangential in Richtung der Außenseite des Belagträgers (1) abflacht.

3. Belagträger (1) nach Anspruch 1 oder 2, **dadurch gekennzeichnet, dass** die Verstärkungsrippe (10; 10a) mittig im Bereich einer halben Länge (L2) der Ausnehmung (9) angeordnet ist.

4. Belagträger (1) nach einem der vorangegangenen Ansprüche, **dadurch gekennzeichnet, dass** der Belagträger (1) eine Breite (B) größer als 9 mm aufweist.

5. Belagträger (1) nach einem der vorangegangenen Ansprüche, **dadurch gekennzeichnet, dass** der Belagträger (1) ein Gussbauteil ist.

6. Belagträger (1) nach einem der vorangegangenen Ansprüche, **dadurch gekennzeichnet, dass** die Verstärkungsrippe (10a) über einen Radius (R) der Ausnehmung (9) des Belagträgers (1) hinaus, geht.

7. Belagträger (1) nach einem der vorangegangenen Ansprüche, **dadurch gekennzeichnet, dass** die Verstärkungsrippe (10; 10a) einstückig mit dem Belagträger (1) ausgebildet ist.

## Claims

1. Lining carrier (1) for a disc brake with a friction lining (2), which lining carrier has a front side (3) which faces the friction lining (2), a rear side (4) which faces away from the friction lining (2), and an edge face (5) which runs around the rear side (4) in plan view, and that region (8) of the edge face (5) which faces a lining carrier slot (6) having a recess (9), **characterized in that** the edge face (5) has a reinforcing rib (10; 10a) axially over a width (B) of the lining carrier (1), in the region of the recess (9) .

2. Lining carrier (1) according to Claim 1, **characterized in that** the reinforcing rib (10; 10a) flattens tangentially, in relation to the lining carrier (1), in the direction of the outer side of the lining carrier (1).

3. Lining carrier (1) according to Claim 1 or 2, **characterized in that** the reinforcing rib (10; 10a) is arranged centrally in the region of a half length (L2) of the recess (9).

4. Lining carrier (1) according to one of the preceding claims, **characterized in that** the lining carrier (1) has a width (B) of greater than 9 mm.

5. Lining carrier (1) according to one of the preceding claims, **characterized in that** the lining carrier (1) is a cast component.

6. Lining carrier (1) according to one of the preceding claims, **characterized in that** the reinforcing rib (10a) goes beyond a radius (R) of the recess (9) of the lining carrier (1).

7. Lining carrier (1) according to one of the preceding claims, **characterized in that** the reinforcing rib (10; 10a) is configured in one piece with the lining carrier (1).

## Revendications

1. Support de garniture (1) pour un frein à disque comprenant une garniture de friction (2), lequel support de garniture présente un côté avant (3) tourné vers la garniture de friction (2), un côté arrière (4) opposé à la garniture de friction (2) et une surface de bord (5) entourant, en vue de dessus, le côté arrière (4), et la région (8) de la surface de bord (5) tournée vers un compartiment de support de garniture (6) présentant un évidement (9), **caractérisé en ce que** la surface de bord (5) présente, axialement sur une largeur (B) du support de garniture (1), dans la région de l'évidement (9), une aile de renforcement (10 ; 10a).

2. Support de garniture (1) selon la revendication 1, **caractérisé en ce que** l'aile de renforcement (10 ; 10a) s'aplatit tangentiellement dans la direction du côté extérieur du support de garniture (1) par rapport au support de garniture (1).

3. Support de garniture (1) selon la revendication 1 ou 2, **caractérisé en ce que** l'aile de renforcement (10 ; 10a) est disposée centralement dans la région d'une demi-longueur (L2) de l'évidement (9) .

4. Support de garniture (1) selon l'une quelconque des revendications précédentes, **caractérisé en ce que** le support de garniture (1) présente une largeur (B) supérieure à 9 mm.

5. Support de garniture (1) selon l'une quelconque des revendications précédentes, **caractérisé en ce que** le support de garniture (1) est un composant coulé.

6. Support de garniture (1) selon l'une quelconque des revendications précédentes, **caractérisé en ce que** l'aile de renforcement (10a) se prolonge au-delà d'un rayon (R) de l'évidement (9) du support de garniture (1).

7. Support de garniture (1) selon l'une quelconque des revendications précédentes, **caractérisé en ce que** l'aile de renforcement (10 ; 10a) est réalisée d'une seule pièce avec le support de garniture (1).
